# EUROPÄISCHE PATENTSCHRIFT

(11) **EP 3 552 811 B1**
(45) Veröffentlichungstag und Bekanntmachung des Hinweises auf die Patenterteilung: **06.04.2022**
(21) Anmeldenummer: 19155193.6
(22) Anmeldetag: 04.02.2019
(51) Int. Cl.: B29D 30/30

(54) **VERFAHREN ZUR HERSTELLUNG EINES FAHRZEUGREIFENS**
METHOD FOR PRODUCING A TYRE FOR A VEHICLE
PROCÉDÉ DE FABRICATION DE PNEU DE VÉHICULE

(30) Priorität: 13.04.2018 DE 102018205605
(43) Veröffentlichungstag der Anmeldung: 16.10.2019
(73) Patentinhaber: Continental Reifen Deutschland GmbH, 30165 Hannover (DE)
(72) Erfinder: Kneussel, Ewald, 30890 Barsinghausen (DE); Su, Dejun, 30159 Hannover (DE)
(74) Vertreter: Continental Corporation

(56) Entgegenhaltungen:
- EP-A1- 0 091 542
- EP-A1- 1 816 011
- EP-A1- 2 431 164
- EP-A2- 0 166 957
- EP-A2- 1 197 317
- DE-A1- 2 837 674
- GB-A- 2 153 760
- US-A1- 2016 167 433

## Beschreibung

Die Erfindung betrifft ein Verfahren zur Herstellung eines Fahrzeugreifens.

Es ist bekannt und üblich, Endabschnitte von Materialbahnen überlappend oder stumpf zu spleißen, um ringförmig vorgeformte Stahl- oder Textilkordkarkassen für Reifen herzustellen. Verfahren und Vorrichtungen zum stumpfen Spleißen sind grundsätzlich bekannt. Beim Überlappspleißen überlappen die Endabschnitte direkt auf der Karkasstrommel. Im fertigen Reifen kann der Überlappungsbereich negative Auswirkungen auf Reifeneigenschaften im Normalbetrieb haben, insbesondere eine Unwucht und eine Ungleichförmigkeit der hergestellten Reifen. Ein weiteres Problem sind die im Überlappungsbereich entstehenden Einschnürungen in den Seitenwänden.

Derartige Verfahren sind beispielsweise aus GB 2 153 760 A, US 2016/167433 A1, EP 0 091 542 A1 und EP 1 197 317 A2 bekannt.

Der Erfindung liegt die Aufgabe zugrunde, ein verbessertes Verfahren zur Herstellung von Fahrzeugreifen bereitzustellen.

Gelöst wird die Aufgabe gemäß Anspruch 1 dadurch, dass ein Verfahren mit folgenden Schritten eingesetzt wird:
a) Bereitstellen einer Reifenbautrommel für die Herstellung eines Reifenrohlings,
b) Bereitstellen einer Reifeninnenseele an der Reifenbautrommel,
c) Auflegen und Aufwickeln der Reifeninnenseele auf die Reifenbautrommel,
   wobei die Materialenden der Reifeninnenseele mit einem Überlappspleiss auf der Reifenbautrommel zusammengefügt werden,
d) Ablängen und Bereitstellen einer Karkasslage mit einem Fördermittel,
e) Bestimmung der Materiallänge der Karkasslage mit einem Sensor,
f) Vergleich des Istwertes der Materiallänge der Karkasslage mit einem Sollwert,
   wobei nachfolgend mit einem Regelungsalgorithmus geprüft wird, ob ein Eingriff nach Schritt g) an der Steuerung der Reifenbautrommel erforderlich ist,
g) Anpassen des Trommeldurchmessers an eine Längenabweichung der gemessenen Karkasslage,
   wobei der Trommeldurchmesser so eingestellt wird, dass nach dem Aufwickeln der Karkasslage auf der Reifenbautrommel ein definierter Überlappspleis mit einer vorgegeben Materialüberlappung erreicht wird,
h) Auflegen und Aufwickeln der Karkasslage auf die Reifenbautrommel,
i) Zusammenspleissen der beiden Materialenden der Karkasslage auf der Reifenbautrommel,
   wobei beide Materialenden mit einem definierten Überlappspleis zusammengefügt werden,
j) Auflegen und Aufwickeln von weiteren Reifenbauteilen auf die Reifenbautrommel,
k) Fertigstellen des Fahrzeugreifen mit weiteren Schritten.

Ein Vorteil der Erfindung ist insbesondere darin zu sehen, dass durch das Verfahren die Herstellung von Fahrzeugreifen verbessert wird.

Die Karkasseinlage für den Fahrzeugreifen wird so hergestellt, dass der Überlappspleiß in der Karkasseinlage immer eine gleichbleibende Qualität aufweist. Der vordere und hintere Endabschnitt der Karkasseinlage werden mit einer vorgegebenen Materialüberlappung direkt übereinander gelegt. Bei einer zu großen oder zu kleinen Überlappung der beiden Endabschnitte würde die Qualität des Materialspleißes wesentlich verschlechtert werden. Mit dem Verfahren können dadurch Fahrzeugreifen hergestellt werden, bei denen das visuelle Problem der Seitenwandeinschnürung wesentlich reduziert wird.

Der definierte Überlappspleiß der Karkasseinlage mit einer vorgegebenen Materialüberlappung wird insbesondere dadurch erreicht, dass die Länge der Karkasslage mit einem Sensor auf dem Fördermittel vermessen wird.

Bei einer Abweichung der Länge der Karkasslage von einem vorgegebenen Wert erfolgt eine Verstellung des Trommeldurchmessers der Reifenbautrommel.

Durch ein Expandieren der Reifenbautrommel kann sichergestellt werden, dass der Überlappspleiß der Karkasslage mit einer vorgegebenen Materialüberlappung erfolgt. Dadurch wird sichergestellt, dass der Überlappspleiß immer in einem Toleranzbereich für eine Materialüberlappung bleibt.

In einer vorteilhaften Weiterbildung der Erfindung ist vorgesehen, dass bei Schritt g) der erforderliche Trommeldurchmesser aus dem Ist-Wert der Materiallänge der Karkasslage und dem Trommelumfang mit der aufgewickelten Reifeninnenseele bestimmt wird, wobei der definierte Überlappspleiss aus der Differenz von Materialllänge der Karkasslage und Trommelumfang bestimmt wird.

Dadurch wird sichergestellt, dass der Überlappspleiß immer mit einer vorgegebenen Materialüberlappung gefertigt wird.

Erfindungsgemäß ist vorgesehen, dass bei Schritt g) die Reifenbautrommel um 0,1 bis 1 %, vorzugsweise 0,2 bis 0,6 %, expandiert wird, wobei sich die Expansion auf den ursprünglichen Trommeldurchmesser mit aufgewickelter Reifeninnenseele bezieht. Dadurch wird der Trommeldurchmesser der Reifenbautrommel nur um einen geringen Wert expandiert. Eine zu große Expansion der Reifenbautrommel könnte die Materialqualität des aufwickelten Reifeninnerliners beeinträchtigen.

In einer weiteren vorteilhaften Weiterbildung der Erfindung ist vorgesehen, dass bei Schritt g) der definierte Überlappspleiss eine Länge von 2 - 6 mm, vorzugsweise 4 mm, aufweist.

Bei dieser Länge für den Überlappspleiß wird eine ausreichende Festigkeit für den Überlappspleiß bei Standardreifen gewährleistet.

In einer weiteren vorteilhaften Weiterbildung der Erfindung ist vorgesehen, dass bei Schritt g) der definierte Überlappspleiss bei Hochleistungsreifen eine Länge von 1 - 3 mm, vorzugsweise 2 mm, aufweist.

Bei dieser Länge für den Überlappspleiß wird eine ausreichende Festigkeit für den Überlappspleiß gewährleistet. Bei Hochleistungsreifen ist ein kleinerer Wert für den Überlappspleiß vorteilhaft, um eine Seitenwandeinschnürung weitestgehend zu reduzieren. In einer weiteren vorteilhaften Weiterbildung der Erfindung ist vorgesehen, dass bei Schritt e) die Bestimmung der Materiallänge der Karkasslage mit einem optischen Sensor erfolgt, der den vorderen und hinteren Endabschnitt erfasst und daraus die Materiallänge berechnet.

Mit einem optischen Sensor lässt sich die Länge der Karkasslage einfach und mit einer hohen Genauigkeit erfassen.

Erfindungsgemäß ist vorgesehen, dass nach Schritt g) der Trommeldurchmesser so eingestellt wird, das nach dem Zusammenspleissen jeweils drei Festigkeitsträger im vorderen und hinteren Endabschnitt angeordnet sind.

Dadurch wird ein Überlappspleiß mit einer gleich bleibenden Qualität erzeugt.

Außerdem wird dadurch die Seitenwandeinschnürung auf ein Minimum reduziert.

In einer weiteren vorteilhaften Weiterbildung der Erfindung ist vorgesehen, dass das Auflegen des hinteren Endabschnittes über den vorderen Endabschnitt der Karkasseinlage mit einer automatisierten Greif- und Auflegevorrichtung erfolgt.

Dadurch kann der hintere Endabschnitt der Karkasseinlage unter Umständen noch gedehnt werden, um zu erreichen, dass beide Endabschnitte direkt übereinander liegen.

Anhand eines Ausführungsbeispieles soll die Erfindung näher erläutert werden. Es zeigt:
- Fig. 1 :: ein Ausführungsbeispiel des Verfahrens,
- Fig. 2:: einen Überlappspleiß der beiden Enden einer Karkasslage in einer Seitenansicht

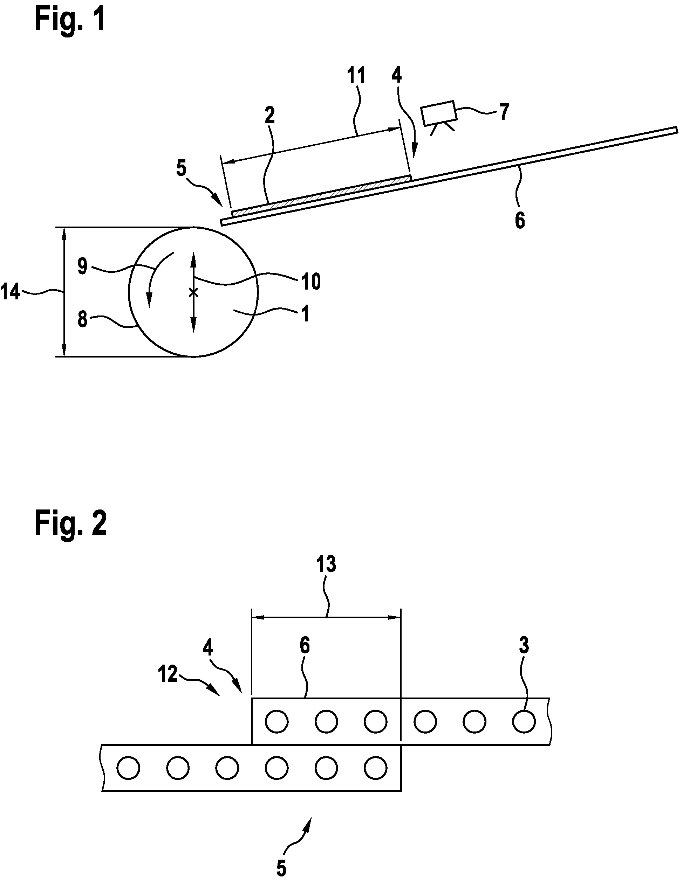

Die Fig. 1 zeigt ein Ausführungsbeispiel des Verfahrens mit der Reifenbautrommel 1 in einer Seitenansicht.

Bei der Reifenbautrommel 1 handelt es sich um eine Karkasstrommel für die Herstellung einer Reifenkarkasse.

Auf der Reifenbautrommel 1 wird zunächst eine Reifeninnenseele 8 aufgewickelt und an den beiden Endabschnitten überlappend zusammengespleißt. Die aufgewickelte Reifeninnenseele 8 mit der Reifenbautrommel 1 bestimmt den Außendurchmesser 14.

Die abgelängte Karkasslage 2 befindet sich auf einem Fördermittel bzw. Servicer 6.

Die Materiallänge 11 der Karkasslage 2 wurde mit dem optischen Sensor 7 vermessen und erfasst.

Das Erfassen der Materiallänge der Karkasslage 2 erfolgt dadurch, dass der Sensor 7 den vorderen Endabschnitt 5 und den hinteren Endabschnitt 4 beim Verfahren der Karkasslage auf dem Fördermittel 6 erfasst. Anschließend wird mit einer Rechnereinheit, die mit dem Sensor 7 verbunden ist, ermittelt, ob die gemessene Materiallänge mit einem vorgegebenen Ist-Wert übereinstimmt.

Wenn das nicht der Fall ist, erfolgt ein Eingriff in die Steuerung der Reifenbautrommel 1. Der Außendurchmesser 14 kann durch ein weiteres Expandieren der Trommel angepasst werden.

Für den Fall, dass die abgelängte Karkasslage 2 länger ist, als der vorgegebene Ist-Wert, greift der Regelalgorithmus zur Steuerung der Reifenbautrommel 1 ein.

Proportional zur gemessenen Längendifferenz der Karkasslage wird die Trommel 1 mit der aufgewickelten Reifeninnenseele 8 geringfügig expandiert.

Anschließend wird die Karkasslage 2 mit dem Fördermittel 6 auf die Trommel 1 aufgelegt und anschließend aufgewickelt.

Der vordere Endabschnitt 5 und der hintere Endabschnitt 4 der Karkasslage werden dabei in Form eines Überlappspleißes zusammengespleißt.

Durch die Expansion der Reifenbautrommel 1 wird die Länge der Karkasslage 2 kompensiert.

Die Fig. 2 zeigt den Überlappspleiß in einer schematischen Seitenansicht. Der vordere Endabschnitt 5 und der hintere Endabschnitt 4 liegen übereinander. Die Länge 13 des Überlappspleißes ist so bemessen, dass ca. drei Festigkeitsträger in radialer Richtung durch den Überlappspleiß 12 erfasst werden.

Außerdem beträgt die Länge 13 des Überlappspleißes 2 bis 6 mm.

### Bezugszeichenliste

### (ist Teil der Beschreibung)

- 1: Reifenbautrommel bzw. Karkasstrommel
- 2: Karkasseinlage bzw. Karkasslage
- 3: Festigkeitsträger
- 4: hinterer Endabschnitt der Karkasseinlage
- 5: vordere Endabschnitt der Karkasseinlage
- 6: Fördermittel bzw. Servicer
- 7: Sensor
- 8: Aufgewickelte Reifeninnenseele auf der Reifenbautrommel
- 9: Rotationsrichtung der Trommel
- 10: Expansion der Reifenbautrommel
- 11: Materiallänge der Karkasseinlage
- 12: Überlappspleiss
- 13: Länge des Überlappspleiss
- 14: Trommeldurchmesser

## Patentansprüche

1. Verfahren zur Herstellung eines Fahrzeugreifens mit einer Reifenkarkasse, Reifenwülsten mit Kernen, einem Reifengürtel und einem Laufstreifen mit folgenden Schritten:
a) Bereitstellen einer Reifenbautrommel (1) für die Herstellung eines Reifenrohlings,
b) Bereitstellen einer Reifeninnenseele (8) an der Reifenbautrommel (1),
c) Auflegen und Aufwickeln der Reifeninnenseele (8) auf die Reifenbautrommel (1), wobei die Materialenden der Reifeninnenseele (8) mit einem Überlappspleiss (12) auf der Reifenbautrommel (1) zusammengefügt werden,
d) Ablängen und Bereitstellen einer Karkasslage (2) mit einem Fördermittel (6),
e) Bestimmung der Materiallänge (11) der Karkasslage (2) mit einem Sensor (7),
f) Vergleich des Istwertes der Materiallänge (11) der Karkasslage (1) mit einem Sollwert,
wobei nachfolgend mit einem Regelungsalgorithmus geprüft wird, ob ein Eingriff nach Schritt g) an der Steuerung der Reifenbautrommel (1) erforderlich ist,
g) Anpassen des Trommeldurchmessers (14) an eine Längenabweichung der gemessenen Karkasslage (2),
wobei der Trommeldurchmesser (14) so eingestellt wird, dass nach dem Aufwickeln der Karkasslage (2) auf der Reifenbautrommel (1) ein definierter Überlappspleis (12) mit einer vorgegeben Materialüberlappung erreicht wird,
wobei der Trommeldurchmesser (14) so eingestellt wird, das nach dem Zusammenspleissen jeweils drei Festigkeitsträger (13) im vorderen und hinteren Endabschnitt (4,5) angeordnet sind, und
wobei die Reifenbautrommel (1) um 0,1 bis 1 %, vorzugsweise 0,2 bis 0,6 %, expandiert wird, wobei sich die Expansion auf den ursprünglichen Trommeldurchmesser (14) mit aufgewickelter Reifeninnenseele (8) bezieht,
h) Auflegen und Aufwickeln der Karkasslage (2) auf die Reifenbautrommel (1),
i) Zusammenspleissen der beiden Materialenden (4,5) der Karkasslage (2) auf der Reifenbautrommel (1),
wobei beide Materialenden (4,5) mit einem definierten Überlappspleis (12) zusammengefügt werden,
j) Auflegen und Aufwickeln von weiteren Reifenbauteilen auf die Reifenbautrommel (1),
k) Fertigstellen des Fahrzeugreifen mit weiteren Schritten.

2. Verfahren nach Anspruch 1,
**dadurch gekennzeichnet, dass**
bei Schritt g) der erforderliche Trommeldurchmesser (14) aus dem Ist-Wert der Materiallänge (11) der Karkasslage (2) und dem Trommelumfang mit der aufgewickelten Reifeninnenseele (8) bestimmt wird,
wobei der definierte Überlappspleiss (12) aus der Differenz von Materialllänge (11) der Karkasslage (2) und Trommelumfang bestimmt wird.

3. Verfahren nach einem der vorhergehenden Ansprüche,
**dadurch gekennzeichnet, dass**
bei Schritt g) der definierte Überlappspleiss (12) eine Länge von 2 - 6 mm, vorzugsweise 4 mm, aufweist.

4. Verfahren nach einem der Ansprüche 1 oder 2,
**dadurch gekennzeichnet, dass**
bei Schritt g) der definierte Überlappspleiss (12) bei Hochleistungsreifen eine Länge von 1 - 3 mm, vorzugsweise 2 mm, aufweist.

5. Verfahren nach einem der vorhergehenden Ansprüche,
**dadurch gekennzeichnet, dass**
bei Schritt e) die Bestimmung der Materiallänge (11) der Karkasslage (2) mit einem optischen Sensor (7) erfolgt, der den vorderen und hinteren Endabschnitt (4,5) erfasst und daraus die Materiallänge (11) berechnet.

6. Verfahren nach einem der vorhergehenden Ansprüche,
**dadurch gekennzeichnet, dass**
das Auflegen des hinteren Endabschnittes über den vorderen Endabschnitt (4,5) der Karkasseinlage (2) mit einer automatisierten Greif- und Auflegevorrichtung erfolgt.

## Claims

1. Method for producing a vehicle tyre with a tyre carcass, tyre beads with cores, a tyre breaker belt and a tread, comprising the following steps:
a) providing a tyre building drum (1) for the production of a green tyre,
b) providing a tyre inner core (8) at the tyre building drum (1),
c) placing and winding the tyre inner core (8) onto the tyre building drum (1), the ends of the material of the tyre inner core (8) being joined together by a lap splice (12) on the tyre building drum (1),
d) cutting to length and providing a carcass ply (2) by a conveying means (6),
e) determining the length of the material (11) of the carcass ply (2) by a sensor (7),
f) comparing the actual value of the length of the material (11) of the carcass ply (1) with a setpoint value,
it subsequently being checked by a control algorithm whether intervention is required after step g) at the controller of the tyre building drum (1),
g) adapting the diameter of the drum (14) to a deviation in the length of the measured carcass ply (2),
the diameter of the drum (14) being set such that, after the winding of the carcass ply (2) on the tyre building drum (1), a defined lap splice (12) with a prescribed material overlap is achieved,
the diameter of the drum (14) being set such that, after the splicing together, three reinforcing elements (13) are respectively arranged in the front and rear end regions (4, 5), and
the tyre building drum (1) being expanded by 0.1 to 1%, preferably 0.2 to 0.6%, the expansion relating to the original diameter of the drum (14) with the wound-on tyre inner core (8),
h) placing and winding the carcass ply (2) onto the tyre building drum (1),
i) splicing together the two ends of the material (4, 5) of the carcass ply (2) on the tyre building drum (1),
the two ends of the material (4, 5) being joined together with a defined lap splice (12),
j) placing and winding further tyre components onto the tyre building drum (1),
k) completing the vehicle tyre by further steps.

2. Method according to Claim 1,
**characterized in that**
in step g), the required diameter of the drum (14) is determined from the actual value of the length of the material (11) of the carcass ply (2) and the circumference of the drum with the wound-on tyre inner core (8),
the defined lap splice (12) being determined from the difference in the length of the material (11) of the carcass ply (2) and the circumference of the drum.

3. Method according to either of the preceding claims,
**characterized in that**
in step g), the defined lap splice (12) has a length of 2-6 mm, preferably 4 mm.

4. Method according to either of Claims 1 and 2,
**characterized in that**
in step g), the defined lap splice (12) on highperformance tyres has a length of 1-3 mm, preferably 2 mm.

5. Method according to one of the preceding claims,
**characterized in that**
in step e), the determination of the length of the material (11) of the carcass ply (2) is performed by an optical sensor (7), which senses the front and rear end portions (4, 5) and from them calculates the length of the material (11).

6. Method according to one of the preceding claims,
**characterized in that**
the placing of the rear end portion over the front end portion (4, 5) of the carcass ply (2) is performed by an automated gripping and placing device.

## Revendications

1. Procédé de fabrication d'un pneu de véhicule comprenant une carcasse de pneu, des talons de pneu comprenant des noyaux, une ceinture de pneu et une bande de roulement, comprenant les étapes suivantes :
a) la fourniture d'un tambour de construction de pneu (1) pour la fabrication d'une ébauche de pneu,
b) la fourniture d'une âme intérieure de pneu (8) sur le tambour de construction de pneu (1),
c) la pose et l'enroulement de l'âme intérieure de pneu (8) sur le tambour de construction de pneu (1), les extrémités de matériau de l'âme intérieure de pneu (8) étant assemblées avec un raccordement par chevauchement (12) sur le tambour de construction de pneu (1),
d) la découpe et la fourniture d'une couche de carcasse (2) avec un moyen de transport (6),
e) la détermination de la longueur de matériau (11) de la couche de carcasse (2) avec un capteur (7),
f) la comparaison de la valeur réelle de la longueur de matériau (11) de la couche de carcasse (1) à une valeur de consigne,
un algorithme de régulation étant ensuite utilisé pour vérifier si une intervention selon l'étape g) sur la commande du tambour de construction de pneus (1) est nécessaire,
g) l'adaptation du diamètre de tambour (14) à un écart de longueur de la couche de carcasse (2) mesurée,
le diamètre de tambour (14) étant ajusté de telle sorte qu'après l'enroulement de la couche de carcasse (2) sur le tambour de construction de pneus (1), un raccordement par chevauchement (12) défini avec un chevauchement de matériau prédéfini est obtenu,
le diamètre de tambour (14) étant ajusté de telle sorte qu'après le raccordement, trois supports de résistance (13) sont agencés respectivement dans les sections d'extrémité avant et arrière (4, 5), et
le tambour de construction de pneus (1) étant expansé de 0,1 à 1 %, de préférence de 0,2 à 0,6 %, l'expansion se rapportant au diamètre de tambour initial (14) avec l'âme intérieure de pneu (8) enroulée,
h) la pose et l'enroulement de la couche de carcasse (2) sur le tambour de construction de pneu (1),
i) le raccordement des deux extrémités de matériau (4, 5) de la couche de carcasse (2) sur le tambour de construction de pneus (1),
les deux extrémités de matériau (4, 5) étant assemblées avec un raccordement par chevauchement défini (12),
j) la pose et l'enroulement d'autres composants de pneu sur le tambour de construction de pneus (1),
k) la finition du pneu de véhicule avec d'autres étapes.

2. Procédé selon la revendication 1, **caractérisé en ce qu'**à l'étape g), le diamètre de tambour nécessaire (14) est déterminé à partir de la valeur réelle de la longueur de matériau (11) de la couche de carcasse (2) et de la circonférence du tambour avec l'âme intérieure de pneu enroulée (8),
le raccordement par chevauchement défini (12) étant déterminé à partir de la différence entre la longueur de matériau (11) de la couche de carcasse (2) et la circonférence du tambour.

3. Procédé selon l'une quelconque des revendications précédentes, **caractérisé en ce qu'**à l'étape g), le raccordement par chevauchement défini (12) présente une longueur de 2 à 6 mm, de préférence de 4 mm.

4. Procédé selon l'une quelconque des revendications 1 ou 2, **caractérisé en ce qu'**à l'étape g), le raccordement par chevauchement défini (12) présente une longueur de 1 à 3 mm, de préférence de 2 mm, pour des pneus à haute performance.

5. Procédé selon l'une quelconque des revendications précédentes, **caractérisé en ce qu'**à l'étape e), la détermination de la longueur de matériau (11) de la couche de carcasse (2) est effectuée avec un capteur optique (7), qui détecte les sections d'extrémité avant et arrière (4, 5) et calcule à partir de celles-ci la longueur de matériau (11).

6. Procédé selon l'une quelconque des revendications précédentes, **caractérisé en ce que** la pose de la section d'extrémité arrière sur la section d'extrémité avant (4, 5) de l'insert de carcasse (2) est effectuée avec un dispositif de préhension et de pose automatisé.
